# EUROPEAN PATENT APPLICATION

(11) **EP 0 875 533 A2**
(43) Date of publication of application: **04.11.1998**
(21) Application number: 98107617.7
(22) Date of filing: 27.04.1998
(51) Int. Cl.: C08L 1/10, C08K 5/524

(54) **Cellulose fatty acid ester-based resin composition**

(30) Priority: 02.05.1997 JP 130390/97
(71) Applicant: DAICEL CHEMICAL INDUSTRIES, LTD., Sakai-shi, Osaka (JP)
(72) Inventor: Fujii, Kenji, Himeji-shi, Hyogo (JP)
(74) Representative: Hansen, Bernd, Dr. Dipl.-Chem.

(57) **Abstract**

The present invention provides a cellulose fatty acid ester-based resin composition which comprises a phosphorous acid ester compound having a melting point of higher than ordinary temperature. The cellulose fatty acid ester-based resin composition having excellent thermal stability and improved ability to prevent odor and coloring, which uses a cellulose fatty acid ester, particularly, a cellulose fatty acid ester having an ash content of 0.01% by weight or more, as the raw material.

## Description

### FIELD OF THE INVENTION

The present invention relates to a cellulose fatty acid ester-based resin composition having excellent thermal stability and improved ability to prevent odor and coloring, which comprises a cellulose fatty acid ester, particularly a cellulose fatty acid ester having an ash content of 0.01% by weight or more, as a raw material.

### BACKGROUND OF THE INVENTION

Cellulose acetate, cellulose acetate propionate, cellulose acetate butyrate and the like cellulose fatty acid esters as the material of cellulose fatty acid ester-based resin compositions are generally produced using sulfuric acid as a catalyst. After completion of the reaction, boiling stabilization treatment is effected to eliminate and remove sulfuric acid remained as free sulfuric acid or a sulfuric ester formed by the reaction with hydroxyl groups of cellulose in the fiber tissue, as much as possible, but extremely small amounts of the sulfuric ester and free sulfuric acid still remain in the cellulose fatty acid ester and become the main cause of poor thermal stability of the resin, namely its deterioration such as coloring or decomposition or scission of molecular chains caused by heat. Therefore, it is general to effect the stabilization treatment by neutralizing with a salt such as acetate, carbonate or oxalate of potassium, sodium, calcium or barium, but much a weak acid salt is frequently added excessively in the industrial production of a cellulose fatty acid ester and its portion unreacted with the sulfuric ester or free sulfuric acid remains in the fiber tissue. In such a case, the deterioration caused by decomposition and scission of molecular chains by sulfuric acid may be prevented, but the unreacted weak acid salt will conversely act as a catalyst upon the formation of a colored substance at the time of heating during production and molding steps of the resin, thereby entailing a problem of markedly spoiling its hue.

In addition, natural sources such as linters and pulp are used as the raw materials for the material cellulose of the cellulose fatty acid ester, and as a result, the material cellulose contains many impurities which cause coloring at the time of heating. In order to remove such substances which cause coloring, it is necessary to carry out various treatments such as bleaching, high temperature pressurization, and filtration at the time of the purification of linters or pulp or at the time of the production of cellulose fatty acid ester. Also, since the cellulose fatty acid ester-based resin generally contains a plasticizer and further contains dyestuffs, pigments, lubricants, fillers and the like, these substances may also cause coloring by heat.

Taking the above into account, a cellulose fatty acid ester-based resin having excellent transparency and heat resistance may be obtained by using cellulose having high purity as the raw material, reducing the amount of sulfuric acid as the reaction catalyst remained in the fiber tissue in the form of the compound of sulfuric acid or free sulfuric acid, using a cellulose fatty acid ester from which coloring-causing substances are removed, and using an additive (such as a plasticizer, a dyestuff, a pigment, a lubricant, and a filler) having high thermal stability. However, there are technical and economical limitations in achieving improvement of thermal stability of the cellulose fatty acid ester-based resin merely based on the purity and quality of the constituting materials. Accordingly, an appropriate heat stabilizer is generally added in combination, and as the heat stabilizers for cellulose fatty acid ester-based resins, a weak organic acid, a thioether-based compound, a phosphorous acid ester compound, an epoxy compound and the like are known. For example, JP-A-63-128036 (the term "JP-A" as used herein means an "unexamined published Japanese patent application") discloses a cellulose fatty acid ester-based resin composition having improved ability to prevent coloring at the time of heating and less physical deterioration can be obtained by incorporating a weak organic acid and a thioether compound, and further a mixture of a phosphorous acid ester compound and/or an epoxy compound, into a cellulose fatty acid ester having an ash content of 0.01% by weight or more. The ash content increases due to excess neutralization treatment (e.g., with acetate, carbonate or oxalate salt of potassium, sodium, calcium or barium) to remove the catalyst sulfuric acid) or due to insufficient purification of the material linters or pulp.

Among these formulations, the phosphorous acid ester compound is highly effective in preventing coloring at the time of heating, and the cellulose fatty acid ester containing blended therein a weak organic acid, a thioether compound and an epoxy compound only is inferior in the ability to prevent coloring at the time of heating to the cellulose fatty acid ester further containing a phosphorous acid ester compound.

However, since the generally used phosphorous acid ester compound is in the liquid form at ordinary temperature, after formation or molding of the resin, the phosphorous acid ester compound in the resin periodically bleeds out of the resin. When the phosphorous acid ester compound is blended, the ability to prevent coloring at the time of heating of the resin composition is improved, but odor is generated from the resin because the phosphorous acid ester compound has a peculiar odor in its liquid form. Particularly, in the case of sealed moldings such as bottles, the moldings are filled with the odor of the phosphorous acid ester compound, thereby causing a problem as the product.

### SUMMARY OF THE INVENTION

The present invention has been accomplished as a result of intensive studies on a resin composition that contains as the raw material, a cellulose fatty acid ester having an increased ash content of 0.01% by weight or more due to excess neutralization treatment, for example, with acetate, carbonate, or oxalate salt of potassium, sodium, calcium or barium, in order to remove the catalyst sulfuric acid, or due to insufficient purification of the material linters or pulp, with the aim of improving the ability to prevent coloring at the time of heating and reducing generation of the odor without causing deterioration of physical properties.

According to the present invention, a cellulose fatty acid ester-based resin composition having improved ability to prevent coloring at the time of heating, which various components contained in the cellulose fatty acid ester as the raw material cause, and having less odor can be realized by a cellulose fatty acid ester-based resin composition which comprises a phosphorous acid ester compound having a melting point of higher than ordinary temperature.

### DETAILED DESCRIPTION OF THE INVENTION

The cellulose fatty acid ester to be used as the material of the cellulose fatty acid ester-based resin composition of the present invention is a compound in which the hydroxyl groups of cellulose are partially or entirely esterified with fatty acids, and the preferred examples include cellulose acetate, cellulose acetate propionate and cellulose acetate butyrate. Particularly preferred is cellulose acetate having acetyl groups in an amount of from 37 to 44%, cellulose acetate propionate having propionyl groups in an amount of from 54 to 57% and acetyl groups in an amount of from 6 to 10% or cellulose acetate butyrate having butyryl groups in an amount of from 34 to 39% and acetyl groups in an amount of from 13 to 15%.

The cellulose fatty acid ester as the material on which the action of the present invention is effective contains substances which cause coloring at the time of heating (ashes remained mainly due to excess neutralization treatment with acetate, carbonate, oxalate or the like salt of potassium, sodium, calcium, barium or the like metal which is carried out to remove the catalyst sulfuric acid or due to improper purification of linters or pulp), and the effect of the present invention becomes particularly significant in the case of a cellulose fatty acid ester having an ash content of 0.01% by weight or more.

As the cellulose fatty acid ester to be used in the present invention, any product in the flake or the like form produced by known methods may be employed. The cellulose fatty acid ester generally has a weight-average molecular weight of 100,000 to 250,000, preferably from 150,000 to 200,000.

The phosphorous acid ester compound to be used in the present invention is not particularly limited, as long as it is a phosphorous acid ester compound having a melting point of higher than ordinary temperature. The term "melting point" as used herein means a temperature which is measured in a moment when a solid sample is changed into liquid phase after gradual external heating of the solid sample inserted into a glass capillary or between glass plates, or an endothermic peak temperature when measured by a differential scanning calorimetry (DSC) or the like. The term "ordinary temperature" as used herein means a temperature of from 20 to 40°C. The phosphorous acid ester compound to be used in the present invention preferably has a melting point of higher than 40°C.

Examples of the phosphorous acid ester compound having a melting point of higher than ordinary temperature include cyclic neopentan-tetra-ylbis(octadecyl) phosphite (melting point, 45 to 50°C), cyclic neopentan-tetra-ylbis(2,4-di-t-butylphenyl) phosphite (melting point, 170°C), cyclic neopentantetra-ylbis(2,6-di-t-butyl-4-methylphenyl) phosphite (melting point, 237°C), 2,2-methylenebis(4,6-di-t-butylphenyl)octyl phosphite (melting point, 148°C), and tris(2,4-di-t-butylphenyl) phosphite (melting point, 185°C).

Since the cellulose fatty acid ester-based resin composition of the present invention contains a phosphorous acid ester compound, coloring of the resin caused by ashes can be prevented at the time of its production and molding with heat, and since the melting point of the phosphorous acid ester compound exceeds ordinary temperature and the compound is therefore solid at ordinary temperature, it is possible to prevent generation of odor caused by periodical bleeding of the phosphorous acid ester compound after production and molding of the resin.

In addition to the phosphorous acid ester compound, the cellulose fatty acid ester-based resin composition of the present invention may contain other heat stabilizers such as a weak organic acid, a thioether compound, and an epoxy compound.

The weak organic acid to be used in the present invention is not particularly limited, as long as it has a pKa value of 1 or more, does not spoil the action of the present invention and has the ability to prevent coloring and deterioration of physical properties. Examples thereof include tartaric acid, citric acid, malic acid, fumaric acid, oxalic acid, succinic acid, and maleic acid. These acids may be used alone or as a mixture of two or more.

The thioether compound to be used in the present invention is not particularly limited, as long as it does not spoil the action of the present invention and has the ability to prevent coloring and deterioration of physical properties. Examples thereof include dilaurylthio dipropionate, ditridecylthio dipropionate, dimyristylthio dipropionate, distearylthio dipropionate, and palmitylstearylthio dipropionate. These thioether compounds may be used alone or as a mixture of two or more.

The epoxy compound to be used in the present invention is not particularly limited, as long as it does not spoil the action of the present invention and has the ability to prevent coloring and deterioration of physical properties. Examples thereof include not only those derived from epichlorohydrin and bisphenol A, but also derivatives obtained from epichlorohydrin and glycerol and cyclic compounds such as vinylcyclohexene dioxide and 3,4-epoxy-6-methylcyclohexylmethyl-3,4-epoxy-6-methylcyclohexane carboxylate. Furthermore, epoxidated soybean oil, epoxidated castor oil, and long chain α-olefin oxides can be used. These compounds may be used alone or as a mixture of two or more.

Since the cellulose fatty acid ester-based resin composition of the present invention requires a heat treatment at a temperature of at least 150°C or more during its production step or molding processing step, it is desirable that the phosphorous acid ester compound, weak organic acid, thioether compound and epoxy compound each have a boiling point of 150°C or more, more preferably 250°C or more.

The blending ratio of the phosphorous acid ester compound in the cellulose fatty acid ester-based resin composition is not particularly limited, and can be decided appropriately depending on the desired performance of each case. When other heat stabilizers are blended, the phosphorous acid ester compound can be used in an amount of from 0.05 to 1.0 part by weight, and the weak organic acid in an amount of from 0.001 to 0.05 part by weight and the thioether compound in an amount of from 0.05 to 1.0 part by weight, based on 100 parts by weight of the cellulose fatty acid ester. When an epoxy compound is further incorporated into the above formulation, the epoxy compound is added preferably in an amount of 5.0 parts by weight or less (excluding 0 part by weight) based on 100 parts by weight of the cellulose fatty acid ester.

When the blending ratios of the phosphorous acid ester compound, weak organic acid and thioether compound are smaller than the above ranges, the effect to prevent coloring and deterioration of physical properties at the time of heat molding may not exert sufficiently, and when the blending ratios of the phosphorous acid ester compound, weak organic acid, thioether compound and epoxy compound are larger than the above ranges, the effect to prevent coloring at the time of heat molding may be rather reduced and deterioration of physical properties may become significant due to the increasing tendency to reduce polymerization degree. Particularly, the thioether compound causes cloudiness by exceeding the limit of compatibility and tends to bleed on the surface of moldings.

With regard to the production method of the cellulose fatty acid ester-based resin composition of the present invention, it can be produced in the usual way except that the cellulose fatty acid ester as the raw material is blended with the phosphorous acid ester compound and, if desired, the other heat stabilizers. The blending method of the phosphorous acid ester compound and the other heat stabilizers is not limited, as long as they are blended prior to the heating step. The blending can be effected by employing arbitrary combinations of known facilities and operations.

If desired, compounds known as a plasticizer may be added in an appropriate amount, generally up to 100 parts by weight per 100 parts by weight of the cellulose fatty acid ester. Examples of the plasticizer include phthalic acid esters such as dimethyl phthalate, diethyl phthalate, dibutyl phthalate, butylbenzyl phthalate, and ethylphthalylethyl glycolate, trimellitic acid esters such as trimethyl trimellitate, triethyl trimellitate, and tri-2-ethylhexyl trimellitate, aliphatic dibasic acid esters such as di-2-ethylhexyl azelate, orthophosphoric acid esters such as tributyl phosphate, tributoxyethyl phosphate, triphenyl phosphate, tricresyl phosphate, cresylphenyl phosphate, and 2-ethylhexyldiphenyl phosphate, recinoleic acid esters such as methylacetyl recinolate, and ester oligomers such as caprolactone oligomer.

With respect to the additives having poor dispersibility, they can be added after dissolving them in an organic solvent which does not spoil the action of the present invention.

### EXAMPLES

### (1) Test Methods

### Test Example 1:

The pellets obtained in Examples 1 to 4 and Comparative Examples 1 to 4 were evaluated for their hue based on the yellow index using a color-difference meter (NDJ-300A, manufactured by Nippon Denshoku Kogyo K.K.).

### Test Example 2:

The degree of odor was evaluated based on the presence and absence of odor (absent: A, present: B).

### (2) Test Results

Results of Test Examples 1 and 2 are shown in Table.

**Table**

| Sample No. | Blending Ratio (parts by weight) | | | | | | Results | |
|---|---|---|---|---|---|---|---|---|
| | Phosphorous Acid Ester Compounds | | | Weak Organic Acid | Thioether Compound | Epoxy Compound | Yellow Index** | Odor |
| | (1) | (2) | (3) | | | | | |
| Example 1 | 0.4 | - | - | 0.02 | 0.2 | 0.4 | 51.0 | A |
| Example 2 | 0.4* | - | - | 0.02 | 0.2 | 0.4 | 51.6 | A |
| Example 3 | 0.8* | - | - | 0.02 | 0.2 | 0.4 | 53.9 | A |
| Example 4 | - | 0.4* | - | 0.02 | 0.2 | 0.4 | 57.3 | A |
| Comparative Example 1 | - | - | 0.4 | 0.02 | 0.2 | 0.4 | 47.8 | B |
| Comparative Example 2 | - | - | 0.4 | 0.02 | 0.2 | 0.4 | 58.6 | B |
| Comparative Example 3 | - | - | 0.1 | 0.02 | 0.2 | 0.4 | 72.1 | B |
| Comparative Example 4 | - | - | - | 0.02 | 0.6 | 0.4 | 65.1 | A |

| | | | | | | | | |
|---|---|---|---|---|---|---|---|---|
| * : Added by dissolving in toluene (10 % by weight solution). | | | | | | | | |
| **: Smaller value of yellow index indicates superior hue. | | | | | | | | |

The heat stabilizers shown in Table are as follows.

### Phosphorous Acid Ester Compounds

(1) Tris(2,4-di-t-butylphenyl) phosphite (solid at ordinary temperature)
(2) 2,2-Methylenebis(4,6-di-t-butylphenyl)octyl phosphite (solid at ordinary temperature)
(3) Trisisodecyl phosphite (liquid at ordinary temperature)

### Weak organic acid

Citric acid

### Thioether compound

Dilaurylthio dipropionate

### Epoxy compound

3,4-Epoxycyclohexylmethyl-3,4-epoxycyclohexane carboxylate (Celloxide 2021P, manufactured by Daicel Chemical Industries, Ltd.)

It can be seen from the results shown in Table that Examples 1 to 4, in which a phosphorous acid ester compound being solid at ordinary temperature was incorporated, provided a resin composition having improved hue, as compared with Comparative Example 4 in which the phosphorous acid ester compound was not incorporated, without generating odor. On the other hand, the resin compositions of Comparative Examples 1 and 2, which a phosphorous acid ester compound being liquid at ordinary temperature was incorporated in and are a conventional composition, did not cause any problem in terms of hue but generated problematic odor. The resin composition of Comparative Example 3, in which the blending ratio of the phosphorous acid ester compound being liquid at ordinary temperature was reduced, still generated odor and exhibited considerably deteriorated hue. The composition of Comparative Example 4 containing no phosphorous acid ester compound did not have a problem with regard to odor but had deteriorated hue. Thus, the compositions of Comparative Examples 1 to 4 could not satisfy hue and odor simultaneously.

### Examples 1 to 4 and Comparative Examples 1 to 4

As a plasticizer, 40 parts by weight of Placcel 305 (a caprolactone oligomer, manufactured by Daicel Chemical Industries, Ltd.) was added to 100 parts by weight of cellulose acetate flakes having an acetylation degree of 51.0%, a weight average molecular weight of 160,000 and an ash content of 0.02% by weight, each of the various heat stabilizers shown in Table was added thereto at respective blending ratio based on 100 parts by weight of the cellulose acetate flakes, and then the resulting blend was thoroughly mixed using a Henschel mixer (manufactured by Mitsui Miike Machinery Co., Ltd.) and dried at 90°C for 8 hours. After the drying, the thus obtained compound was pelletized at a temperature of 230°C using a 30 m/m twin screw extruder.

The cellulose fatty acid ester-based resin composition having the above-described constitution according to the present invention has excellent thermal stability and prevents coloring caused by ashes and additives such as plasticizer, dyestuff and pigments at the time of heating of the resin, and prevents generation of odor due to periodical bleeding of the phosphorous acid ester compound after production and molding, since the phosphorous acid ester compound has a melting point of higher than ordinary temperature and therefore is solid at ordinary temperature. It has small reduction rate of the polymerization degree, and does not cause deterioration of physical properties such as impact strength. Even when the cellulose fatty acid ester having high ash content, of which application is limited due to a problem of generating odor after heating production and secondary molding, is used as the raw material, the problem of generating odor does not occur and the application of the material can therefore be expanded. For example, the materials having a low α-cellulose content such as wood pulp can be used and, since bleaching, high temperature pressurization, filtration and the like treatment steps at the time of purification of the material and production of the cellulose fatty acid ester can be simplified or omitted, a cellulose fatty acid ester-based resin composition having excellent heat resistance and transparency can be obtained at a low cost.

While the invention has been described in detail and with reference to specific embodiments thereof, it will be apparent to one skilled in the art that various changes and modifications can be made therein without departing from the spirit and scope thereof.

## Claims

1. A cellulose fatty acid ester-based resin composition which comprises a phosphorous acid ester compound having a melting point of higher than ordinary temperature.

2. The cellulose fatty acid ester-based resin composition of claim 1, which comprises 100 parts by weight of a cellulose fatty acid ester and 0.05 to 1.0 part by weight of a phosphorous acid ester compound having a melting point of higher than ordinary temperature.

3. A cellulose fatty acid ester-based resin composition which comprises 100 parts by weight of a cellulose fatty acid ester, 0.05 to 1.0 part by weight of a phosphorous acid ester compound having a melting point of higher than ordinary temperature, 0.001 to 0.05 part by weight of a weak organic acid, and 0.05 to 1.0 part by weight of a thioether compound.

4. A cellulose fatty acid ester-based resin composition which comprises 100 parts by weight of a cellulose fatty acid ester, 0.05 to 1.0 part by weight of a phosphorous acid ester compound having a melting point of higher than ordinary temperature, 0.001 to 0.05 part by weight of a weak organic acid, 0.05 to 1.0 part by weight of a thioether compound, and from more than 0 to 5.0 parts by weight of an epoxy compound.

5. The cellulose fatty acid ester-based resin composition of claim 1, wherein the melting point of the phosphorous acid ester compound exceeds 40°C.

6. The cellulose fatty acid ester-based resin composition of claim 3, wherein the melting point of the phosphorous acid ester compound exceeds 40°C.

7. The cellulose fatty acid ester-based resin composition of claim 4, wherein the melting point of the phosphorous acid ester compound exceeds 40°C.
